# EUROPÄISCHE PATENTANMELDUNG

(11) **EP 2 778 490 A2**
(43) Veröffentlichungstag der Anmeldung: **17.09.2014**
(21) Anmeldenummer: 14158501.8
(22) Anmeldetag: 10.03.2014
(51) Int. Cl.: F16L 1/036, F16L 37/098

(54) **Leitungselement**

(30) Priorität: 11.03.2013 DE 202013101042 U
(71) Anmelder: REHAU AG + Co, 95111 Rehau (DE)
(72) Erfinder: Krause, Frank, 91301 Forchheim (DE)

(57) **Zusammenfassung**

Die vorliegende Erfindung betrifft ein Leitungselement (10) für eine im Erdreich zu verlegende Leitung, mit wenigstens einem Endabschnitt (12), der mit einem Endabschnitt (22) eines benachbarten Leitungselements (20) verbindbar ist, dadurch gekennzeichnet, dass am Endabschnitt (12) ein Aufschiebeabschnitt (14), ein daran angrenzender Dichtungsabschnitt (16) und ein an diesen angrenzender Eingriffsabschnitt (18) ausgebildet sind.

## Beschreibung

### Hintergrund der Erfindung

Die vorliegende Erfindung betrifft ein Leitungselement für eine im Erdreich zu verlegende Leitung.

Bekannte Leitungen, die für die Verlegung im Erdreich vorgesehen sind, werden in vielen Fällen derart im Erdreich verlegt, dass sie in ein zuvor ausgebildetes Erdloch "vorgetrieben" werden. Diese Leitungen bestehen meist zumindest teilweise aus einem Polymermaterial und werden auch Kunststoffvortriebsrohre genannt. Sie können insbesondere als Verlege-leitungen bzw. Aufnahmeleitungen für Gasleitungen oder Strom- und Fernmeldekabel oder dergleichen verwendet werden. Es ist auch bekannt, diese Leitungen als Abwasserleitungen bzw. Abwasserrohre oder auch als Regenwasserleitungen bzw. Regenwasserrohre zu verwenden.

Die Verlegung im Erdreich erfolgt dadurch, dass einzelne Leitungselemente, wie beispielsweise Rohrstücke entsprechend dem geplanten Verlauf bzw. entsprechend dem Verlauf des zuvor ausgebildeten Erdlochs im wesentlichen in Achsrichtung nacheinander in das zuvor ausgebildete Erdloch eingetrieben und zur Ausbildung der Leitung miteinander verbunden werden, wie es beispielweise aus der DE 3402198 A1 für die Ausbildung einer Schutzleitung zum Schutz von im Erdreich verlegten elektrischen Leitungen bekannt ist. Die Verbindung zwischen den einzelnen Leitungselementen ist hierbei meist in Form einer Steckverbindung oder einer Rastverbindung ausgebildet. Weitere bekannte typische Leitungselemente zur Ausbildung von im Erdreich zu verlegenden Leitungen sind unter anderem aus der EP 1 375 114 A2, der EP 1 705 418 A2, der DE 200 17 639 U1, der DE 195 36 703 A1 und der DE 101 39 984 A1 bekannt.

Unter Rasten wird in diesem Zusammenhang die Schaffung einer Verbindung verstanden, die darauf beruht, dass ein Rohrelement mit einer abschnittsweise vorliegenden Umfangserweiterung (bsplw. in Form eines umlaufenden Wulstes oder einer umlaufenden Rippe) in ein Rohrelement geschoben wird, das seinerseits einen am Innenumfang umlaufenden Wulst oder eine entsprechende Rippe oder eine entsprechende Nut aufweist. Beim Ineinanderschieben erfolgt eine - teilweise erhebliche - kurzzeitige elastische radiale Verformung eines oder beider Rohrelemente, wenn die genannten Rastmittel übereinander hinweg bewegt werden. Der Rastvorgang ist beendet und das Rasten ist erfolgt, wenn die beiden Rohrelemente eine Endposition einnehmen, bei der ein Herausschieben verhindert wird.

Bekannte ungerastete Verbindungen zwischen den Rohrelementen sind zwar meist leichter lösbar, jedoch nicht sehr zugfest und damit recht anfällig für Undichtigkeiten. Schließlich können die einzelnen Rohrelemente beim Vortrieb in das Erdreich bzw. in das zuvor ausgebildete Erdloch durch Steine oder ähnlichem vorgeschädigt werden und dann unter Dau-erbelastung versagen.

Die meist recht flexiblen Verbindungen zwischen den bekannten Leitungselementen sind insbesondere bei stark gekrümmten Leitungen bzw. stark gekrümmten vorgeformten Erdlöchern hohen Beanspruchungen ausgesetzt. Die Verbindungen neigen daher insbesondere bei Abwinkelung und starker Verformung zur Undichtigkeit, so dass Feuchtigkeit bzw. Flüssigkeit aus dem Erdreich in die Leitung bzw. Innenvolumina der Leitungselemente dringen kann. Dies ist insbesondere problematisch, wenn die Leitung für die Aufnahme von stromführenden Kabeln vorgesehen ist. Dieses Eindringen von Feuchtigkeit bzw. Flüssigkeit, wie z.B. Abwasser aus der Umgebung bzw. der Umwelt in die Leitung bzw. Innenvolumina der Rohrelemente wird auch als Infiltration bezeichnet. Die durch Infiltration eindringende Flüssigkeit kann beispielsweise kontaminiert sein und so z.B. eine Korrosion an in der Leitung angeordneten bzw. aufgenommenen stromführenden Kabeln hervorrufen.

Ein Austreten von Flüssigkeit aus einer im Erdreich verlegten Leitung hingegen wird als Exfiltration bezeichnet und betrifft die Anwendungsfälle, wo die Leitung z.B. als Abwasserleitung oder Regenwasserleitung, also für die Durchströmung mit einer Flüssigkeit in Form des sogenannten Fremdwassers oder allgemein einem Fluid vorgesehen ist. Bei einer Exfiltration infolge einer Undichtigkeit kann z.B. eine Verseuchung des Erdreichs auftreten, wenn z.B. infolge der Exfiltration Abwasser aus industriellen Prozessen aus der Leitung ins Erdreich tritt.

So ist es möglich, dass vorgesehene Dichtungen beim Verbinden der Leitungselemente verschoben oder beschädigt werden. Die Wiederherstellung der Dichtigkeit gestaltet sich dann in der Regel recht schwierig. Schließlich können die einzelnen Leitungselemente beim Vortrieb in das Erdreich bzw. in das zuvor ausgebildete Erdloch durch Steine oder ähnlichem vorgeschädigt werden und dann unter Dauerbelastung versagen.

### Zugrundeliegende Aufgabe

Der vorliegenden Erfindung liegt daher die Aufgabe zugrunde, ein Leitungselement für eine im Erdreich zu verlegende Leitung anzugeben, mit dem es durch Verbinden mit weiteren Leitungselementen möglich ist, eine in einem Erdreich verlegte Leitung herzustellen, die in einfacher Weise miteinander verbunden werden können, die es gestattet, höhere Kräfte anzuwenden, um das Leitungselement in das Erdreich vorzutreiben und bei welcher das Risiko für eine Undichtigkeit im Vergleich zu bekannten Lösungen deutlich reduziert ist.

### Erfindungsgemäße Lösung

Diese Aufgabe wird erfindungsgemäß mit einem Leitungselement für eine im Erdreich zu verlegende Leitung gemäß Anspruch 1 gelöst.

Erfindungsgemäß wurde erkannt, dass ein Leitungselement für eine im Erdreich zu verlegende Leitung, mit wenigstens einem Endabschnitt, der mit einem Endabschnitt eines benachbarten Leitungselements verbindbar ist, dann besonders vorteilhaft ist, wenn am Endabschnitt ein Aufschiebeabschnitt, ein daran angrenzender Dichtungsabschnitt und ein an diesen angrenzender Eingriffsabschnitt ausgebildet sind.

Die Ausbildung eines Aufschiebeabschnittes, eines daran angrenzenden Dichtungsabschnittes und eines an diesen angrenzenden Eingriffsabschnittes am Endabschnitt ermöglicht es, die Leitungselemente in einfacher Weise miteinander zu verbinden, dadurch eine im Erdreich zu verlegende Leitung herzustellen, die es gestattet, höhere Kräfte anzuwenden, um das Leitungselement in das Erdreich vorzutreiben und bei welcher das Risiko für eine Undichtigkeit im Vergleich zu bekannten Lösungen deutlich reduziert ist. Erfindungsgemäß ist vorgesehen, dass das Leitungselement wenigstens einen Endabschnitt aufweist, der mit einem benachbarten Leitungselement verbindbar ist.
Hierzu weist der Endabschnitt ein erstes Verbindungsmittel auf, das mit einem zweiten Verbindungsmittel in Eingriff bringbar ist, das an einem Endabschnitt des benachbarten Leitungselements ausgebildet ist.

Dies ist wie folgt realisierbar:
In einer besonders vorteilhaften Ausbildung der Erfindung ist vorgesehen, dass das Leitungselement derart gestaltet ist, dass der Eingriffsabschnitt wenigstens abschnittsweise wenigstens eine Haltefläche an seiner Außenseite entlang des Umfangs aufweist, die mit einer dazu komplementär gestalteten Haltefläche an der Außenseite entlang des Umfangs im Verbindungszustand der Leitungselemente in Anlage bringbar ist, das an einem Eingriffsabschnitt des benachbarten Leitungselements ausgebildet ist.

Das Vorsehen eines Eingriffsabschnittes, der wenigstens abschnittsweise wenigstens eine Haltefläche an seiner Außenseite entlang des Umfangs aufweist, die mit einer dazu komplementär gestalteten Haltefläche an der Außenseite entlang des Umfangs im Verbindungszustand der Leitungselemente in Anlage bringbar ist, das an einem Eingriffsabschnitt des benachbarten Leitungselements ausgebildet ist, ermöglicht es in einfacher Weise, Leitungselement für eine im Erdreich zu verlegende Leitung zu verbinden.

Besonders günstig ist es, wenn der Endabschnitt zur Herstellung einer Rastverbindung rastend in einen Endabschnitt des benachbarten Leitungselements festlegbar ist.

Es ist damit möglich, die Leitungselemente besonders schnell und sicher zu verbinden und insbesondere die Verrastung sicher durchzuführen.

In einer günstigen Fortbildung der vorliegenden Erfindung ist vorgesehen, dass das Leitungselement derart ausgeführt ist, dass an dem Dichtungsabschnitt wenigstens eine Hauptdichtung angeordnet ist, wobei die Hauptdichtung dafür vorgesehen ist, die Verbindung zu dem benachbarten Leitungselement gegen eindringende Flüssigkeit abzudichten.

Die Hauptdichtung kann bevorzugt teilweise oder zur Gänze aus EPDM (Abk. für Ethylen-Propylen-Dien-Kautschuk) oder NBR (Abk. für Nitrilkautschuk) oder SBR (Abk. für StyrolButadien-Kautschuk) oder einem TPE (Abk. für thermoplastisches Elastomer) bestehen. Die Hauptdichtung kann bevorzugt in Form einer O-Ring-Dichtung oder in Form einer Lippendichtung ausgebildet sein. Auch die Sicherheitsdichtung kann bevorzugt in Form einer O-Ring-Dichtung oder in Form einer Lippendichtung ausgebildet sein. Sowohl die O-RingDichtung als auch die Lippendichtung sind praktische und wirksame Dichtungs-Formen. Alternativ können die Sicherheitsdichtung und die Hauptdichtung jede beliebige Querschnittsform aufweisen, welche eingerichtet ist, eine hinreichende bzw. wirksame Dichtwirkung bereitzustellen.

Erfindungsgemäß kann zusätzlich zu der wenigstens einen Hauptdichtung, die dafür vorgesehen ist, die Verbindung zu dem benachbarten Leitungselement gegen eindringende Flüssigkeit abzudichten, wenigstens eine Sicherheitsdichtung vorgesehen sein, welche bei bestehender Undichtigkeit die Dichtigkeit wiederherstellt. Hierzu ist die Sicherheitsdichtung durch Kontakt mit Flüssigkeit aktivierbar, wobei die Sicherheitsdichtung bevorzugt teilweise oder zur Gänze aus einem quellfähigen Material besteht. Durch die Verwendung eines quellfähigen Materials, das insbesondere ein quellfähiges Elastomer bzw. ein thermoplastischer Elastomer-Verbund sein kann (wie z.B. Q-TEC bekannt von AWADOCK) kann die Dichtigkeit wieder hergestellt werden. Das quellfähige Material quillt bei Berührung mit Flüssigkeit auf, wobei durch dieses Aufquellen die Dichtigkeit wieder herstellbar ist. Quell-volumen, Quelldruck und Quellbeginn sind vorzugsweise einstellbar. Eine Sicherheitsdichtung, welche teilweise oder zur Gänze aus einem quellfähigen Material besteht, passt sich durch ihre Volumenvergrößerung und Flexibilität nahezu jeder beliebigen Form an und kann somit Undichtigkeiten abdichten.

Die Flüssigkeit, welche bei bestehender Undichtigkeit ohne die Sicherheitsdichtung in das Leitungselement bzw. in das Innenvolumen des Leitungselements eindringen würde, ist insbesondere Wasser bzw. Feuchtigkeit aus dem Erdreich. Diese Flüssigkeit kann insbesondere infolge eines Versagens der Hauptdichtung bzw. infolge einer Undichtigkeit der Hauptdichtung zu der Sicherheitsdichtung durchdringen und diese zur Wiederherstellung der Dichtigkeit aktivieren.
Ein Versagen bzw. eine Undichtigkeit der Hauptdichtung kann die Folge eines Verrutschens oder einer Beschädigung der Hauptdichtung sein, wobei sich das Verrutschen oder die Beschädigung insbesondere während des Verbindens der Leitungselemente zur Herstellung einer im Erdreich verlegten Leitung ereignen kann, wobei die Verbindung beispielsweise derart erfolgen kann, dass der Endabschnitt, an dem die Hauptdichtung und die Sicherheitsdichtung angeordnet sind, in einen Endabschnitt des benachbarten Leitungselements eingesteckt oder auf diesen aufgesteckt wird.

In einer besonders bevorzugten Weiterbildung der Erfindung ist vorgesehen, dass das Leitungselement derart ausgebildet ist, dass an der Außenfläche des Aufschiebeabschnitts wenigstens eine Gleitfläche ausgebildet ist, die beim Aufschieben des zu verbindenden benachbarten Leitungselements dessen Durchmesser erweitert.

Ein Leitungselement, das derart ausgebildet ist, dass an der Außenfläche des Aufschiebeabschnitts wenigstens eine Gleitfläche ausgebildet ist, die beim Aufschieben des zu verbindenden benachbarten Leitungselements dessen Durchmesser erweitert, ist in besonders bevorzugter Weise für eine einfache Verbindung von Leitungselement zu einer im Erdreich zu verlegende Leitung geeignet.
Die Verbindung geschieht dabei bevorzugt durch ein Aufschieben eines zu verbindenden Leitungselements auf den Endabschnitt eines Leitungselements, wobei durch geringe Krafteinwirkung der Durchmesser des zu verbindenden Leitungselements erweitert wird.

In einer bevorzugten Ausbildungsform der Erfindung ist vorgesehen, dass die Gleitfläche als Schräge, insbesondere als Kegelausschnittsfläche geformt ist.
Bevorzugt beträgt der Winkel zwischen der Achse des Leitelements und der Gleitfläche etwa 10° bis 20°, besonders bevorzugt etwa 13° bis 17°, ganz besonders bevorzugt etwa 14° bis 16°.
Die Gleitfläche ist bevorzugt um den gesamten Umfang an der Außenseite umlaufend ausgebildet. Alternativ kann auch vorgesehen sein, dass die Gleitfläche abschnittsweise entlang des Umfangs an der Außenseite ausgebildet ist.

Dadurch ist es möglich, das zu verbindende benachbarte Leitungselement in einfacher Weise, und ohne erhebliche Kräfte aufzuwenden, auf den Endabschnitt des Leitungselements aufzuschieben.

Beim weiteren Aufschieben rastet der Endabschnitt des zu verbindenden Leitungselements zur Herstellung einer Rastverbindung in einen Endabschnitt des Leitungselements und ist dann dort festgelegt.

Die Sicherheitsdichtung ist in einer Nut am Dichtungsabschnitt aufgenommen.

Es kann im Rahmen der vorliegenden Erfindung vorgesehen sein, dass die Sicherheitsdichtung am Dichtungsabschnitt zwischen der Hauptdichtung und der Gleitfläche angeordnet ist.

In einer anderen Ausführungsart der Erfindung kann vorgesehen sein, dass die Sicherheitsdichtung am Dichtungsabschnitt zwischen der Hauptdichtung und der Haltefläche angeordnet ist.

In einer dritten Ausführungsart der Erfindung kann weiterhin vorgesehen sein, dass Sicherheitsdichtungen am Dichtungsabschnitt sowohl zwischen der Hauptdichtung und der Gleitfläche, als auch zwischen der Hauptdichtung und der Haltefläche angeordnet sind.

Die Sicherheitsdichtung kann am Dichtungsabschnitt zwischen der Hauptdichtung und der Gleitfläche und / oder zwischen der Hauptdichtung und der Haltefläche angeordnet sein.

Durch diese Maßnahmen kann je nach technischer Notwendigkeit eine verbesserte Dichtheit der miteinander verbundenen Leitungselemente erreicht werden.

Bevorzugt sind Hauptdichtung und Sicherheitsdichtung derart zueinander beabstandet, dass deren Abstand dem 0,5- bis 3-fachen der Breite der Sicherheitsdichtung in axialer Richtung beträgt.
Dadurch wird eine besonders sichere Dichtheit der miteinander verbundenen Leitungselemente gewährleistet.

Bei der vorliegenden Erfindung hat sich als äußerst praktikabel erwiesen, wenn vorgesehen ist, das Leitungselement derart zu gestalten, dass der Aufschiebeabschnitt, der daran angrenzende Dichtungsabschnitt und der an diesen angrenzende Eingriffsabschnitt in axialer Richtung etwa gleich lang sind.
Durch diese Maßnahme ist einerseits sichergestellt, die Leitungselemente in einfacher Weise miteinander zu verbinden, dadurch eine im Erdreich zu verlegende Leitung herzustellen, die es gestattet, höhere Kräfte anzuwenden, um das Leitungselement in das Erdreich vorzutreiben und bei welcher das Risiko für eine Undichtigkeit im Vergleich zu bekannten Lösungen deutlich reduziert ist.

Andererseits ist ein solches Leitungselement gemäß vorliegender Erfindung in besonders einfacher Weise herstellbar.

Von besonderem Vorteil im Rahmen der vorliegenden Erfindung hat sich ergeben, das Leitungselement derart auszugestalten, das das Leitungselement zwei komplementär zueinander geformte Endabschnitte aufweist, wobei jeder Endabschnitt mit einem jeweiligen benachbarten Leitungselement verbindbar ist.
Auf diese Weise gelingt es ohne besonderen Aufwand, eine im Erdreich zu verlegende Leitung durch Verbindung einzelner Leitungselemente herzustellen, die es gestattet, höhere Kräfte anzuwenden, um das Leitungselement in das Erdreich vorzutreiben und bei welcher das Risiko für eine Undichtigkeit im Vergleich zu bekannten Lösungen deutlich reduziert ist.

Das Leitungselement gemäß vorliegender Erfindung besteht vorzugsweise aus einem Polymermaterial oder enthält ein solches, wobei das Polymermaterial vorzugsweise ein ungefülltes Polypropylen sein kann.
In anderen Ausführungen kann auch vorgesehen sein, für das Leitungselement Polyvinylchlorid oder Polyethylen oder ein vernetztes Polyethylen vorzusehen.

In einer Fortbildung der vorliegenden Erfindung kann auch vorgesehen sein, die Wandung des Leitungselements mehrschichtig auszuführen, wobei die Schichten aus unterschiedlichen Polymermaterialien sein können.
Auch das Vorsehen von Verschleißschutz-, Markier-, Diffusionssperr-, und ähnlichen Schichten ist dabei möglich.

Bei einer bevorzugten Ausführungsform ist an einer Innenwandung des Leitungselements wenigstens ein Identifikationselement angebracht. Das Identifikationselement ist vorzugsweise aus dem Innenvolumen des Leitungselements heraus nachweisbar, wobei das Innenvolumen von der Innenwandung des Leitungselements begrenzt ist. Das Identifikationselement ist mit Daten bzw. Informationen versehen, die vorzugsweise das Leitungselement bzw. die im Erdreich verlegte Leitung betreffen, also Daten bzw. Informationen wie Seriennummern, Werkstoffangaben, durch Normen bzw. Gesetze geforderte Daten, Herstellerangaben, Herstellungsdatum, Rohrtyp, Rohrmaterial usw. Die Daten bzw. Informationen können in Form von Schriftzeichen bzw. symbolischen Zeichen vorliegen. Die Daten bzw. Informationen sind durch Verwendung von in das Innenvolumen des Leitungselements bzw. in das Innenvolumen der verlegten Leitung einbringbaren Kontrollvorrichtungen - wie beispielsweise Kameras für die Leitungsinspektion - erfassbar, so dass sie einem Anwender zu Verfügung gestellt werden können. In der Praxis spricht man hier auch von einer Kanal-TV-Befahrung. Besonders bevorzugt ist das Identifikationselement in Form eines RFID-Chips ausgebildet. Mit einem RFID-Chip lassen auf dem RFID-Chip abgespeicherte Daten, die vorzugsweise Daten sind, die dem Leitungselement bzw. der im Erdreich verlegten Leitung zugeordnet sind, drahtlos auslesen, so dass auf den Einsatz von Kontrollvorrichtungen, wie Kameras für die Leitungsinspektion, verzichtet werden kann.

Bei einer praktischen Ausführungsform ist das Leitungselement mit einer verschleißfesten Außenschicht versehen. Die verschleißfeste Außenschicht verhindert eine Beschädigung des Leitungselements, vorzugsweise eine Beschädigung einer tragenden Innenschicht des Leitungselements, auf welcher die Außenschicht vorzugsweise aufgebracht ist, einhergehend mit einer zusätzlichen Sicherheit beim Eintreiben bzw. Einbringen des Leitungselements bzw. der Leitung in das Erdreich.

Die Erfindung betrifft ferner eine Leitung zur Verlegung im Erdreich, umfassend wenigstens ein erfindungsgemäßes Leitungselement, vorzugsweise wenigstens zwei miteinander verbundene erfindungsgemäße Leitungselemente. Zur Verbindung der Leitungselemente werden Endabschnitte der Leitungselemente derart miteinander verbunden, dass die jeweils von einer Innenwandung begrenzten Innenvolumina der Leitungselemente verbunden sind. Insbesondere kann die Leitung zur Verlegung im Erdreich beispielsweise wenigstens 3 und bis zu 10 oder wenigstens 3 und bis 100 verbundene erfindungsgemäße Leitungselementen umfassen, wobei die Anzahl je nach Anwendungsfall variieren kann.

Schließlich betrifft die Erfindung noch ein Leitungssystem, das wenigstens eine Leitung, wie vorstehend beschrieben, aufweist.
Anwendung findet die vorliegende Erfindung insbesondere, um damit Verlegeleitungen bzw. Aufnahmeleitungen für Gasleitungen oder Strom- und Fernmeldekabel oder dergleichen zur Verfügung zu stellen.
Die Leitungen können auch als Abwasserleitungen bzw. Abwasserrohre oder auch als Regenwasserleitungen bzw. Regenwasserrohre verwendet werden.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

### Kurzbeschreibung der Zeichnungen

Nachfolgend wird ein Ausführungsbeispiel der Erfindung anhand der beigefügten Zeichnungen näher erläutert. Es zeigt:
- Fig. 1: zwei geschnittene schematische Darstellungen zweier Ausführungsbeispiele von erfindungsgemäßen Leitungselementen;
- Fig. 2: eine geschnittene schematische Darstellung eines erfindungsgemäßen Leitungselements, auf dessen Endabschnitt der Endabschnitt eines benachbarten Leitungselements teilweise aufgeschoben ist;
- Fig. 3: eine geschnittene schematische Darstellung eines erfindungsgemäßen Leitungselements, das mit einem benachbarten Leitungselement verbunden ist;
- Fig. 4: zwei geschnittene schematische Darstellungen zweier weiterer Ausführungsbeispiele von erfindungsgemäßen Leitungselementen.

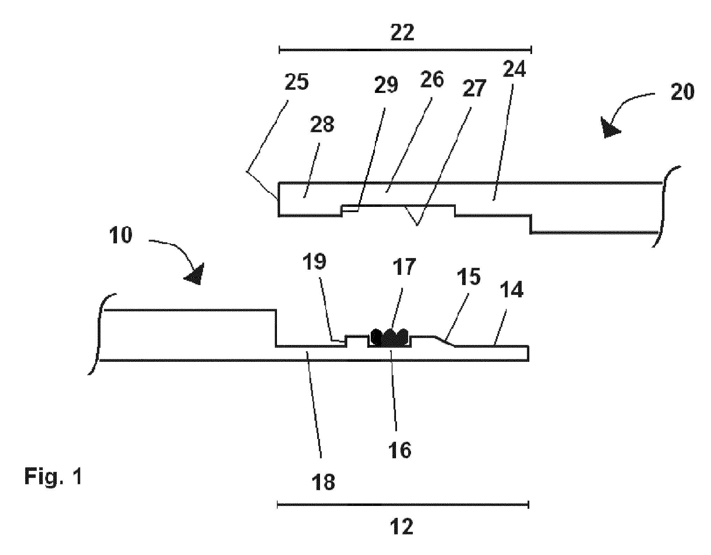

Die Fig. 1 zeigt eine geschnittene schematische Darstellung eines Ausführungsbeispiels eines erfindungsgemäßen Leitungselements 10.

Das dargestellte Leitungselement 10 für eine im Erdreich zu verlegende Leitung weist einen mit einem gezeigten benachbarten Leitungselement 20 über ein Verbindungsmittel verbindbaren Endabschnitt 12 auf. Hierfür ist der Endabschnitt 12 derart gestaltet, dass ein Aufschiebeabschnitt 14, ein daran angrenzender Dichtungsabschnitt 16 und ein an diesen angrenzender Eingriffsabschnitt 18 ausgebildet sind.
Der Aufschiebeabschnitt 14, der daran angrenzende Dichtungsabschnitt 16 und der an diesen angrenzende Eingriffsabschnitt 18 sind in axialer Richtung etwa gleich lang.
Das Leitungselement 10 weist dabei an seinen entfernten (distalen) Ende den Aufschiebeabschnitt 14 auf, einen daran angrenzenden Dichtungsabschnitt 16 und ein an diesen angrenzenden Eingriffsabschnitt 18.

Der Eingriffsabschnitt 18 weist wenigstens abschnittsweise wenigstens eine Haltefläche 19 an seiner Außenseite entlang des Umfangs auf, die mit einer dazu komplementär gestalteten Haltefläche 29 an der Außenseite entlang des Umfangs im Verbindungszustand der Leitungselemente 10, 20 in Anlage bringbar ist, das an einem Eingriffsabschnitt 28 des benachbarten Leitungselements 20 ausgebildet ist.
Im Verbindungszustand ist der Eingriffsabschnitt 28 zur Herstellung einer Rastverbindung rastend in einen Eingriffsabschnitt 18 des benachbarten Leitungselements 10 festlegbar.

An dem Endabschnitt 12 des Leitungselements 10, das in Form eines Rohrelements bzw. eines Rohres ausgebildet ist, ist im Bereich des Dichtungsabschnitts eine Hauptdichtung 17 in Form einer Mehrfachwulstdichtung angeordnet und in einer Ringnut aufgenommen.
An dem Dichtungsabschnitt 16 ist eine Hauptdichtung 17 angeordnet, wobei die Hauptdichtung 17 dafür vorgesehen ist, die Verbindung zu dem benachbarten Leitungselement 20 gegen eindringende Flüssigkeit abzudichten.

Bei bestehender Verbindung zwischen den beiden Leitungselementen 10, 20 ist die Hauptdichtung 17 dafür vorgesehen, die Verbindung gegen eindringende Flüssigkeit, wie z.B. Grundwasser abzudichten.

Eine hier nicht gezeigte Sicherheitsdichtung ist dafür vorgesehen, die Dichtigkeit der Verbindung bei bestehender Undichtigkeit - z. B. infolge eines Verrutschens der Hauptdichtung 17 oder infolge einer Beschädigung an der Hauptdichtung 17 - wiederherzustellen.

An der Außenfläche des Aufschiebeabschnitts 14 ist eine Gleitfläche 15 ausgebildet, die beim Aufschieben des zu verbindenden benachbarten Leitungselements 20 dessen Durchmesser erweitert.

In Fig. 1 ist weiterhin in einer geschnittenen schematischen Darstellung ein benachbartes Leitungselement 20 in einer zweiten Ausführungsart gezeigt.

Das dargestellte benachbarte Leitungselement 20 weist einen mit dem gezeigten Leitungselement 10 über ein Verbindungsmittel verbindbaren Endabschnitt 22 auf. Hierfür ist der Endabschnitt 22 derart gestaltet, dass ein Aufschiebeabschnitt 24, ein daran angrenzender Dichtungsabschnitt 26 und ein an diesen angrenzender Eingriffsabschnitt 28 ausgebildet sind.
Der Aufschiebeabschnitt 24, der daran angrenzender Dichtungsabschnitt 26 und der an diesen angrenzender Eingriffsabschnitt 28 sind in axialer Richtung etwa gleich lang.
Das benachbarte Leitungselement 20 weist dabei an seinen entfernten (distalen) Ende den Eingriffsabschnitt 28 auf, einen daran angrenzenden Dichtungsabschnitt 26 und einen an diesen angrenzenden Aufschiebeabschnitt 24.

Der Eingriffsabschnitt 28 weist wenigstens abschnittsweise wenigstens eine Haltefläche 29 an seiner Innenseite entlang des Umfangs auf, die mit einer dazu komplementär gestalteten Haltefläche 19 an der Außenseite entlang des Umfangs im Verbindungszustand der Leitungselemente 10, 20 in Anlage bringbar ist, die an einem Eingriffsabschnitt 18 des Leitungselements 10 ausgebildet ist.
Im Verbindungszustand ist der Eingriffsabschnitt 28 zur Herstellung einer Rastverbindung rastend in einen Eingriffsabschnitt 18 des Leitungselements 10 festlegbar.

An dem Endabschnitt 22 des benachbarten Leitungselements 20, das in Form eines Rohrelements bzw. eines Rohres ausgebildet ist, ist im Bereich des Dichtungsabschnitts eine Dichtungsanlagefläche 27 angeordnet.
Die Dichtungsanlagefläche 27 sorgt zusammen mit der am Dichtungsabschnitt 16 angeordneten Hauptdichtung 17, dafür, die Verbindung zwischen dem benachbarten Leitungselement 20 und dem Leitungselement 10 gegen eindringende Flüssigkeit abzudichten.

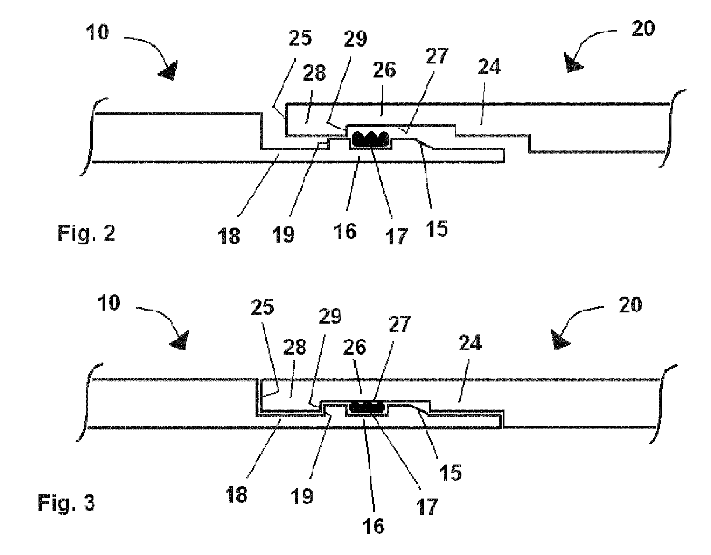

In Fig. 2 ist eine geschnittene schematische Darstellung eines erfindungsgemäßen Leitungselements 10 gezeigt, auf dessen Endabschnitt 12 der Endabschnitt 22 eines benachbarten Leitungselements 20 teilweise aufgeschoben ist.

Am Leitungselement 10 ist an der Außenfläche des Aufschiebeabschnitts 14 eine Gleitfläche 15 ausgebildet, die beim Aufschieben des zu verbindenden benachbarten Leitungselements 20 dessen Durchmesser erweitert.

Hierbei gleitet beim Aufschieben des Endabschnitts 22 des benachbarten Leitungselements 20 der Eingriffsabschnitt 28 über die Gleitfläche 15, die am Leitungselement 10 an der Außenfläche des Aufschiebeabschnitts 14 ausgebildet ist. Hierbei wird der Durchmesser des zu verbindenden benachbarten Leitungselements 20 geringfügig vergrößert, was der Elastizität des verwendeten Polymermaterials geschuldet ist.

Die Bemaßung des Endabschnitt 22 mit dem Aufschiebeabschnitt 24, dem daran angrenzenden Dichtungsabschnitt 26 und dem an diesen angrenzenden Eingriffsabschnitt 28 ist derart ausgebildet, dass der Eingriffsabschnitt über die Dichtung 17 hinweg bewegt werden kann, ohne dass die Hauptdichtung 17 aus der Ringnut, in der sie aufgenommen ist, heraus gerollt wird oder eine Quetschung oder Beschädigung erleidet.

Wenn das Aufschieben soweit erfolgt ist, dass der Eingriffsabschnitt 28 in den komplementär geformten Eingriffsabschnitt 18 einrasten kann, kommt es zur Anlage der Haltefläche 19 mit der dazu komplementär gestalteten Haltefläche 29.

In Fig. 2 ist nicht gezeigt, dass das zu verbindenden benachbarten Leitungselements 20 auf Grund der Elastizität des verwendeten Polymermaterials aufgeweitet ist, was in kontinuierlicher Weise am Ende des benachbarten Leitungselements 20 in dessen Endbereich - besonders in dessen Endabschnitt 22 - erfolgt. Der Einfachheit halber wurde diese Konizität des Endbereichs nicht in der Fig. 2 wiedergegeben, dem Fachmann ist diese aber klar und geläufig.

In Fig. 3 ist eine geschnittene schematische Darstellung eines erfindungsgemäßen Leitungselements 10 gezeigt, das mit einem benachbarten Leitungselement 20 verbunden ist. In Fig. 3 ist gezeigt, wie der verrastete Zustand ausgeführt ist.

Nach dem vollständigen Aufschieben des Endabschnitts 22 des benachbarten Leitungselements 20 auf den Endabschnitt 12 des Leitungselements 10 ist der Eingriffsabschnitt 28 in den komplementär geformten Eingriffsabschnitt 18 eingerastet.
Dadurch kommt es zur Anlage der Haltefläche 19 mit der dazu komplementär gestalteten Haltefläche 29.

Die Leitungselemente 10, 20 sind dann miteinander verrastet.

Die Dichtungsanlagefläche 27 ist dabei in Anlage mit der am Dichtungsabschnitt 16 angeordneten Hauptdichtung 17 gebracht, wodurch die Verbindung zwischen dem benachbarten Leitungselement 20 und dem Leitungselement 10 gegen eindringende Flüssigkeit abgedichtet ist.

Die in Fig. 3 gezeigten Spalte im Bereich der Verbindung zwischen Leitungselement 10 und benachbarten Leitungselement 20 dienen nur der Übersichtlichkeit und sollen nur die Abgrenzung zwischen den beiden Leitungselementen 10, 20 darstellen. Sie sind in der Realität kleiner bzw. bei in Anlage gebrachten Abschnitten dann Null oder verschwindend klein.

Aus Fig. 3 ist ersichtlich, dass der Innendurchmesser des Leitungselements 10 und des verbundenen benachbarten Leitungselements 20 im Bereich der Verbindung gleich bleibt und keinen Sprung aufweist.
Dies ist vorteilhaft für das Leiten von Fluiden oder das Einbringen von Gegenständen, wie Kabeln und dergleichen, in den verbundenen Leitungselementen.
Weiterhin ist gezeigt, dass die Wandstärke des Leitungselements 10 und des verbundenen benachbarten Leitungselements 20 im Bereich der Verbindung addiert etwa gleich bleibt und keinen Sprung aufweist.
Dies ist vorteilhaft, was die Stabilität der verbundenen Leitungselemente sowie die Weiterleitung von Kräften angeht.
Schließlich ist gezeigt, dass sich das verbundene benachbarte Leitungselement 20 mit einer sehr großen Stirnfläche auf eine dazu komplementär gestalteten Fläche am Endabschnitt 12 des Leitungselements 10 abstützt, wodurch große Kräfte beim Einbringen in das Erdreich einsetzbar sind.

Die Bezugszeichen in den Fig. 1, 2, 3 entsprechen einander, so dass in den Fig. 2 und 3 einige weggelassen wurden.

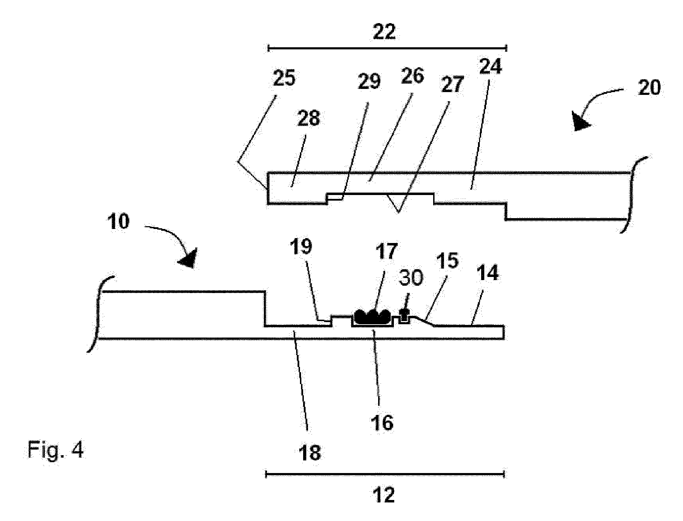

Die Fig. 4 zeigt eine geschnittene schematische Darstellung eines weiteren Ausführungsbeispiels eines erfindungsgemäßen Leitungselements 10.

Die Bezugszeichen in Fig. 4 entsprechen denen von Fig. 1, es wird dazu ausdrücklich darauf Bezug genommen.

Die hier gezeigte Sicherheitsdichtung 30 ist dafür vorgesehen, die Dichtigkeit der Verbindung bei bestehender Undichtigkeit - z. B. infolge eines Verrutschens der Hauptdichtung 17 oder infolge einer Beschädigung an der Hauptdichtung 17 - wiederherzustellen.

Die Sicherheitsdichtung 30 ist durch Kontakt mit Flüssigkeit, insbesondere mit Wasser oder Feuchtigkeit aktivierbar, wobei die Sicherheitsdichtung 30 bevorzugt teilweise oder zur Gänze aus einem quellfähigen Material besteht. Durch die Verwendung eines quellfähigen Materials, das insbesondere ein quellfähiges Elastomer bzw. ein thermoplastischer Elastomer-Verbund sein kann (wie z.B. Q-TEC bekannt von AWADOCK) kann die Dichtigkeit wieder hergestellt werden. Eine solche Sicherheitsdichtung 30, welche teilweise oder zur Gänze aus einem quellfähigen Material besteht, passt sich durch ihre Volumenvergrößerung und Flexibilität nahezu jeder beliebigen Form an und kann somit Undichtigkeiten abdichten.

Die Sicherheitsdichtung 30 ist dazu in einer Nut am Dichtungsabschnitt 16 aufgenommen.

Es kann im Rahmen der vorliegenden Erfindung vorgesehen sein, dass die Sicherheitsdichtung 30 am Dichtungsabschnitt 16 zwischen der Hauptdichtung 17 und der Gleitfläche 15 angeordnet ist, wie dies in Fig. 4 gezeigt ist.

In einer anderen Ausführungsart der Erfindung kann vorgesehen sein, dass die Sicherheitsdichtung 30 am Dichtungsabschnitt 16 zwischen der Hauptdichtung 17 und der Haltefläche 19 angeordnet ist.

In einer dritten Ausführungsart der Erfindung kann weiterhin vorgesehen sein, dass Sicherheitsdichtungen 30 am Dichtungsabschnitt 16 sowohl zwischen der Hauptdichtung 17 und der Gleitfläche 15, als auch zwischen der Hauptdichtung 17 und der Gleitfläche 15 angeordnet sind.

Durch diese Maßnahmen kann je nach technischer Notwendigkeit eine verbesserte Dichtheit der miteinander verbundenen Leitungselemente erreicht werden.

### Bezugszeichenliste

- 10: Leitungselement
- 12: Endabschnitt
- 14: Aufschiebeabschnitt
- 15: Gleitfläche
- 16: Dichtungsabschnitt
- 17: Hauptdichtung
- 18: Eingriffsabschnitt
- 19: Haltefläche
- 20: benachbartes Leitungselement
- 22: Endabschnitt
- 24: Aufschiebeabschnitt
- 25: Stirnfläche
- 26: Dichtungsabschnitt
- 27: Dichtungsanlagefläche
- 28: Eingriffsabschnitt
- 29: Haltefläche
- 30: Sicherheitsdichtung

## Patentansprüche

1. Leitungselement (10) für eine im Erdreich zu verlegende Leitung, mit wenigstens einem Endabschnitt (12), der mit einem Endabschnitt (22) eines benachbarten Leitungselements (20) verbindbar ist, **dadurch gekennzeichnet, dass** am Endabschnitt (12) ein Aufschiebeabschnitt (14), ein daran angrenzender Dichtungsabschnitt (16) und ein an diesen angrenzender Eingriffsabschnitt (18) ausgebildet sind.

2. Leitungselement (10) nach Anspruch 1, **dadurch gekennzeichnet, dass** der Eingriffsabschnitt (18) wenigstens abschnittsweise wenigstens eine Haltefläche (19) an seiner Außenseite entlang des Umfangs aufweist, die mit einer dazu komplementär gestalteten Haltefläche (29) an der Außenseite entlang des Umfangs im Verbindungszustand der Leitungselemente (10, 20) in Anlage bringbar ist, das an einem Eingriffsabschnitt (28) des benachbarten Leitungselements (20) ausgebildet ist.

3. Leitungselement (10) nach Anspruch 1 oder 2, **dadurch gekennzeichnet, dass** der Eingriffsabschnitt (18) zur Herstellung einer Rastverbindung rastend in einen Eingriffsabschnitt (28) des benachbarten Leitungselements (20) festlegbar ist.

4. Leitungselement (10) nach einem der vorangehenden Ansprüche, **dadurch gekennzeichnet, dass** an dem Dichtungsabschnitt (16) wenigstens eine Hauptdichtung (17) angeordnet ist, wobei die Hauptdichtung (17) dafür vorgesehen ist, die Verbindung zu dem benachbarten Leitungselement (20) gegen eindringende Flüssigkeit abzudichten.

5. Leitungselement (10) nach einem der vorangehenden Ansprüche, **dadurch gekennzeichnet, dass** an der Außenfläche des Aufschiebeabschnitts (14) wenigstens eine Gleitfläche (15) ausgebildet ist, die beim Aufschieben des zu verbindenden benachbarten Leitungselements (20) dessen Durchmesser erweitert.

6. Leitungselement (10) nach einem der vorangehenden Ansprüche, **dadurch gekennzeichnet, dass** der Aufschiebeabschnitt (14), der daran angrenzender Dichtungsabschnitt (16) und der an diesen angrenzender Eingriffsabschnitt (18) in axialer Richtung etwa gleich lang sind.

7. Leitungselement (10) nach einem der vorangehenden Ansprüche, **dadurch gekennzeichnet, dass** das Leitungselement (10) zwei komplementär zueinander geformte Endabschnitte (12, 22) aufweist, wobei jeder Endabschnitt (12, 22) mit einem jeweiligen benachbarten Leitungselement (20) verbindbar ist.

8. Leitung zur Verlegung im Erdreich, umfassend wenigstens ein Leitungselement (10) nach einem der Ansprüche 1 bis 7.

9. Leitung nach Anspruch 8, umfassend wenigstens zwei miteinander verbundene Leitungselemente (10, 20).

10. Leitungssystem aufweisend wenigstens eine Leitung gemäß Anspruch 9.
